# EUROPEAN PATENT SPECIFICATION

(11) **EP 3 807 599 B1**
(45) Date of publication and mention of the grant of the patent: **22.04.2026**
(21) Application number: 19733666.2
(22) Date of filing: 14.06.2019
(51) Int. Cl.: G01D 5/20, F16H 48/20

(54) **DIFFERENTIAL HAVING ARMATURE POSITION DETECTION**
DIFFERENZIAL MIT ANKERPOSITIONSBESTIMMUNG
DIFFÉRENTIEL AVEC DÉTECTION DE LA POSITION DE L'ARMATURE

(30) Priority: 14.06.2018 US 201862684886 P; 19.10.2018 US 201862748333 P
(43) Date of publication of application: 21.04.2021
(73) Proprietor: Eaton Intelligent Power Limited, Dublin 4 (IE)
(72) Inventor: ALLEN, Jordan, Robert, Galesburg, Ml 49053 (US)
(74) Representative: Schwan Schorer & Partner mbB
(86) International application number: PCT/EP2019/025182
(87) International publication number: WO 2019/238272

(56) References cited:
- GB-A- 2 367 623
- GB-A- 2 382 227
- JP-A- 2004 208 460
- US-A1- 2017 191 556

## Description

### FIELD

The present teachings relate, in general, to electronically actuated locking differentials and, in particular to an electronically actuated locking differential having a secondary coil that measures a change in inductance to determine the position of an armature in relation to a stator in the locking differential.

### BACKGROUND

In automotive applications, an electronically actuated locking differential of the related art may be actuated electronically and is designed for forward-wheel-drive (FWD), rear-wheel-drive (RWD), all-wheel-drive (AWD), and four- wheel-drive (4WD) vehicles to allow the differential to be locked or unlocked when it is so desired. The driver can lock the front and/or rear wheels by manually activating a switch or button mounted to a dash or console of the vehicle. In this type of torque- controlling device, the armature is allowed to spin or rotate with the differential and the armature is not mechanically attached to a lock plate within the differential.

While locking differentials of this type have generally worked for their intended purposes, certain disadvantages remain. More specifically, these arrangements limit the ability to electronically sense the locked state of the differential. Further, adding a sensor to a rotating armature might be a cause for increased costs because the sensor is non-contacting. Also, wear and durability become a concern with any sensor being attached to a rotating armature.

Document US 2017/191556 A1 describes a locking differential assembly including a plunger configured to be actuated by a solenoid wound on a stator, and a secondary coil to detect an inductance of the solenoid indicating a position of the plunger.

### SUMMARY

The present invention is a position detection device configured for use with a locking differential as it is defined in claim 1. The position detection device configured for use with a locking differential is configured to determine a position of an armature in relation to a stator. The stator has a primary coil that comprises an outer diameter. The armature moves relative to the stator between engaged and disengaged positions corresponding to the locking differential being in a locked and unlocked state. The position detection device includes a single secondary coil disposed proximate to the primary coil and radially disposed within the outer diameter of the primary coil. The secondary coil is configured to determine a change in inductance based on movement of the armature. The change in inductance is indicative of a change in position of the armature relative to the stator. The primary coil is disposed within a first boundary of the stator and the secondary coil is disposed within a second boundary of the primary coil. The primary coil defines a primary coil central axis and the secondary coil defines a secondary coil central axis, wherein the primary and secondary coil central axes are parallel and offset from one another.

According to additional features, the stator can define a housing, the primary and secondary coils being disposed within the housing. The secondary coil can determine (i) when the primary coil is on and (ii) when the primary coil is off. A primary coil status indicator can indicate an energized state of the primary coil. The secondary coil can determine (iii) when the armature is in the disengaged position and (iv) when the armature is in the engaged position. A locked status indicator can indicate whether the armature is locked or unlocked. The armature can be mechanically coupled to a housing of the locking differential with a retaining clip. The retaining clip can be formed of low magnetic permeable material. The low permeable material can comprise 302 stainless steel.

### DRAWINGS

Other aspects of the present teachings will be readily appreciated as the same becomes better understood after reading the subsequent description taken in connection with the accompanying drawings wherein:
FIG. 1 is a partial perspective view of an electronically actuated locking differential incorporating a secondary coil according to one example of the present teachings;
FIG. 2 is a partial sectional view of the electronically actuated locking differential of FIG. 1 ;
FIG. 3 is a cross sectional view of a stator constructed in accordance to prior art;
FIG. 4 is a schematic illustration of a primary coil and secondary coil arrangement of a locking differential of the present invention;
FIG. 5 is another cross-sectional view of the locking differential of FIG. 2;
FIG. 6 is a side view of the armature, stator and secondary coil and shown with the armature disengaged;
FIG. 7 is a side view of the armature, stator and secondary coil and shown with the armature disengaged;
FIG. 8 is a plan view of a secondary winding constructed in accordance to another example of the present invention;
FIG. 9 is a partial sectional view of an electrically actuating locking differential that incorporates a retaining clip formed of a low permeable material according to another example of the present invention;
FIG. 10 is a partial perspective view of an electromagnetic stator having a sensor thereon configured to detect a position of an armature plate according to additional features of the present invention;
FIG. 11 is a plan view of the electromagnetic stator of FIG 10;
FIG. 12 is a cross sectional view of the electromagnetic stator of FIG. 10;
FIG. 13 is a schematic illustration of a primary coil and position sensor arrangement of a locking differential of the present invention; and
FIG. 14 is a cross-sectional view of a locking differential that incorporates the electromagnetic stator and sensor configuration of FIG. 10.

### DETAILED DESCRIPTION

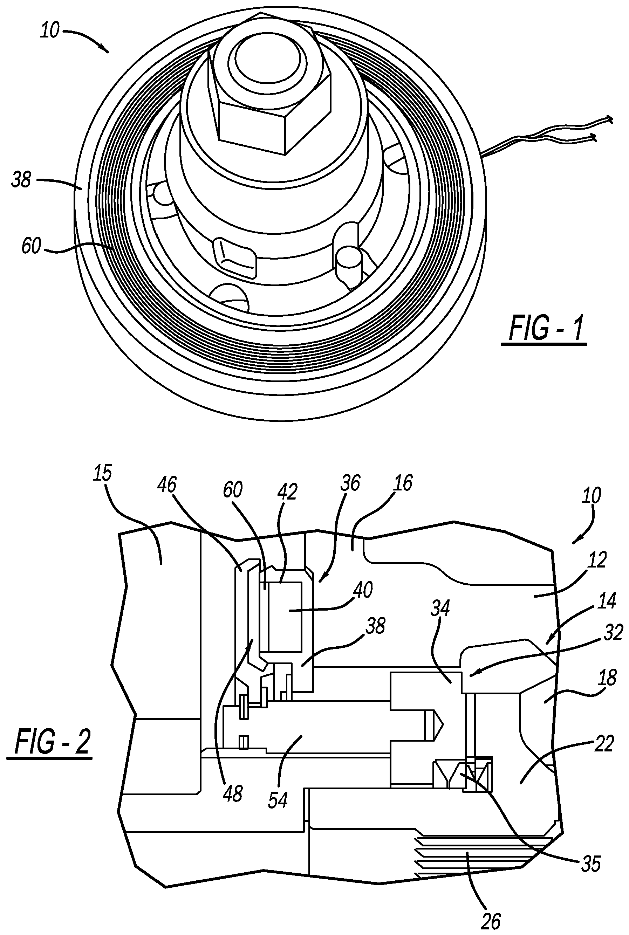

One representative example of an electronically actuated locking differential of the type contemplated by the present teachings is generally indicated at 10 in Figures 1 and 2. As shown in FIG. 2, the differential 10 includes a gear case, generally indicated at 12, and an end cap (not shown), which may be fastened to the gear case 12 by any suitable fastener, such as by a plurality of bolts (not shown). The gear case 12 and end cap cooperate with each other to define a gear chamber, generally indicated at 14. The differential 10 can be housed within a differential case 15. Torque input to the differential 10 is typically by an input ring gear (not shown), which may be attached to a flange 16. A gear set is supported within the gear chamber 14 and has at least a pair of input pinion gears 18. The pinion gears 18 are mounted rotatably about a pinion shaft (not shown), which is secured relative to the gear case 12 by any suitable mechanism. The pinion gears 18 are input gears of the gear set and in meshing engagement with a respective pair of left and right side gears, 22 (one side gear shown in the FIGS.). The side gears 22 define respective sets of internal, straight splines 26 (only one shown for gear 22) that are adapted to be in splined engagement with mating external splines on a respective pair of left and right axle shafts (not shown).

With general reference now to FIGS. 1 -7, features of the instant application will now be described. A rotation-prevention mechanism, generally indicated at 32, has a generally annular collar member or lock plate 34 and is disposed entirely within the gear case 12 and operably associated with side gear 22 (the first output gear). The lock plate 34 is spaced from the side gear 22 and is slideable along the outer surface of the side gear 22. The lock plate 34 is biased toward the non- actuated, "unlocked" mode by a return spring 35 such as a wave spring. An electronic actuator, generally indicated at 36, is disposed primarily external to the gear case 12. More specifically, the electronic actuator 36 is disposed at the end of and about the gear case 12 adjacent side gear 22 (the first output gear). The electronic actuator 36 has a stator 38 primarily external to the gear case 12. More specifically, the stator 38 is disposed at the end of and about the gear case 12 adjacent to the flange 16. The stator 38 is stationary and non-rotating relative to the gear case 12.

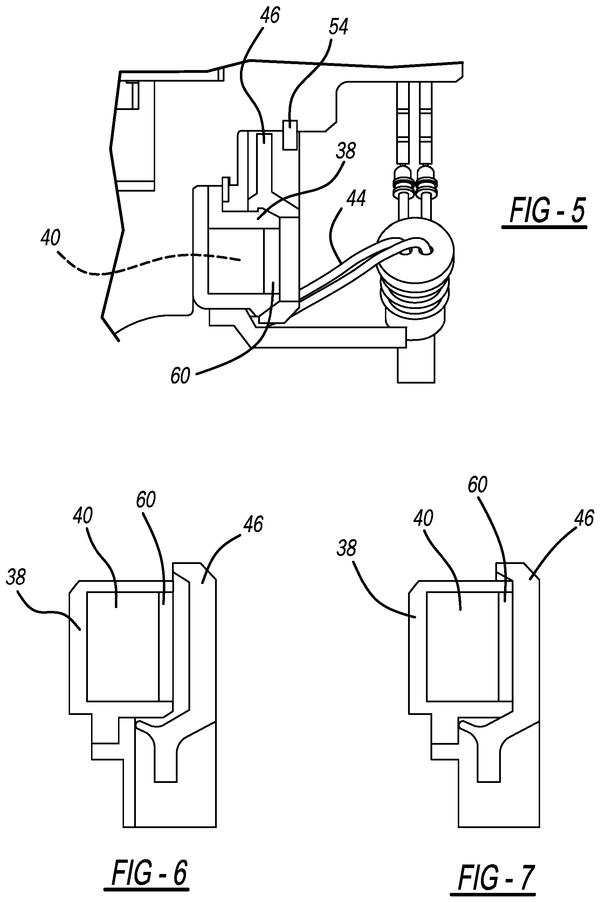

The electronic actuator 36 also has an electromagnetic (primary) coil, generally indicated at 40, that is disposed in a cavity 42 of the stator 38. The electromagnetic coil 40 is energized by a pair of electrical leads 44 (FIG. 5) and receives direct current (DC) from a source (not shown). The electronic actuator 36 also has an armature, generally indicated at 46, spaced from the electromagnetic coil 40 to form a gap 48 therebetween. The armature 46 is mechanically coupled to the lock plate 34 by an annular slip ring 54.

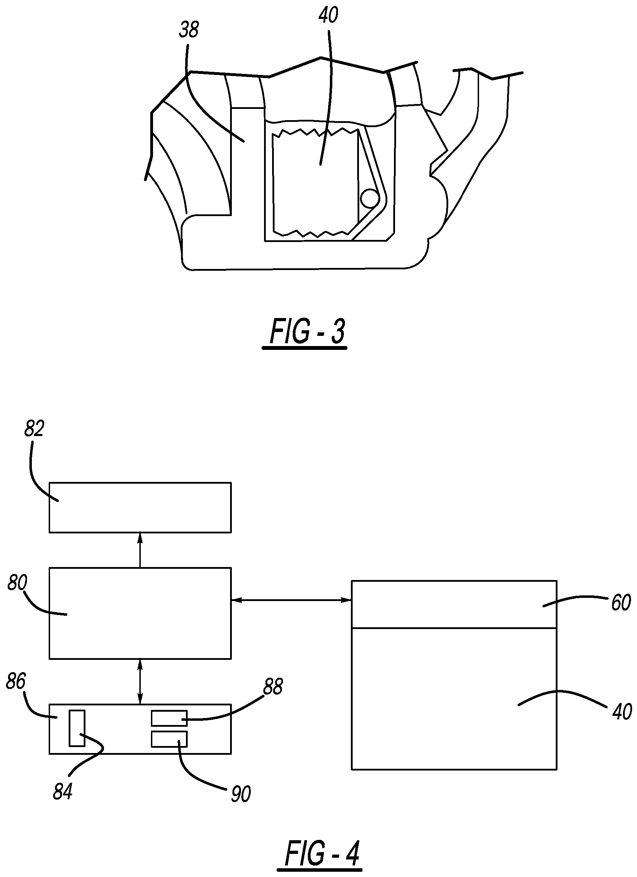

The actuator 36 includes a secondary coil 60 disposed in the stator 38 as will be described herein. The secondary coil 60 can be placed on or near the primary coil 40 within the boundary of the housing of the stator 38. The secondary coil 60 is used to determine the position of the armature 46 relative to the stator 38 to interpret the state of the differential 10 in the locked, semi- engaged or unlocked condition. As shown in FIG. 4, a signal can be sent from the secondary coil 60 indicative of a change in inductance to a controller 80 that sends a signal to a display, cluster or other vehicle instrumentation 82 to convey the locking state of the differential 10 to the driver.

During normal, straight-ahead operation of a vehicle within which the differential 10 is employed, no differentiation occurs between the left and right axle shafts or side gears (side gear 22 shown). Therefore, the pinion gears 18 do not rotate relative to the pinion shaft 20. As a result, the gear case 12, pinion gears 18, and side gears all rotate about an axis of rotation as if the gear case 12, pinion gears 18, and side gears are a solid unit.

When direct current (DC) power is supplied to the electromagnetic coil 40, magnetic energy is generated within the stator 38 which creates an attractive force between the armature 46 and stator 38 starting at around 40 Ibf and ending at around 250 lbf and causing the armature 46 to move toward the stator 38. This force is transferred through the slip ring 54 and to the lock plate 34 compressing the return spring 62 until the lock plate 34 exerts a required retarding torque on the side gear 22, locking it to the differential case 12 and thus locking the LH and RH axle shafts independent of driveline rotation. It should be appreciated in light of the present invention that the differential 10 allows the LH and RH axle shafts to remain locked independent of vehicle direction. It should also be appreciated in light of the present invention that the differential 10 is preferred for applications where frequent rock cycles or direction reversals are common such as during snow plowing. It should further be appreciated in light of the present invention that the differential 10 also enables ease of lock detection by repositioning the slip ring 54 away from the electromagnetic coil 40, allowing both the stator 38 and the armature 46 to remain stationary relative to the rotation of the differential 10.

The differential 10 may be controlled manually, wherein a driver of the vehicle manually selects "locked" mode (rather than "unlocked" mode) to operate the differential 10. For example, when, say the vehicle is at rest, the driver simply manually activates a switch or button 84, such as a simple momentary-type "on/off" toggle or rocker switch or push button, mounted to a dash or console 86 of the vehicle. The console 86 can be integrated into the vehicle instrumentation 82. In this way, an electric circuit (not shown) is closed, thereby turning on current in the circuit and a lamp (not shown) located in or near the toggle switch or push button 84 to indicate to the driver that the differential is actuated. Current flows in the circuit and ultimately to the electromagnetic coil 40 of the differential 10. The differential 10 then operates in the "locked" mode (i.e., when the vehicle is in first gear or reverse). In this way, the first output gear 22 is locked relative to the gear case 12, preventing any further differentiation between the first output gear 22 and gear case 12.

By not allowing the armature 46 to rotate, parasitic losses can be eliminated when the differential 10 is locked because any frictional drag between the armature 46 and the stator 38 is eliminated. The electronic actuator 36 of the present teachings creates less heat within the differential 10 due to less friction. Since the armature 46 is mechanically coupled to the lock plate 34, locking and unlocking of the differential 10 can be detected or sensed based on the axial position of the armature 46.

With general reference to FIGS. 2-7, the secondary coil 60 will be further described. During operation, the secondary coil 60 can detect a position of the armature 46 by using the change in inductance of the secondary coil 60. In this regard, as the armature 46 moves left and right and viewed in FIG. 2, the inductance of the secondary coil 60 changes and the position of the armature 46 can be determined. It will be appreciated that the secondary coil 60 can send a signal to the controller 80 that sends a signal to a display, cluster or other vehicle instrumentation 82 to convey the locking state of the differential 10 to the driver. By knowing the position of the armature 46, the state (fully locked, fully unlocked, positions intermediate of locked and unlocked) of the locking differential 10 can be determined. Explained further, the configuration of the present invention can determine four states, namely (i) when the primary coil 40 is on (energized), (ii) when the primary coil 40 is off (de-energized), (iii) when the armature 46 is in the disengaged (unlocked) position (FIG. 6), and (iv) when the armature 46 is in the engaged (locked) position (FIG. 7). In some examples, the console 86 can further include a primary coil status indicator 88 that indicates an energized state of the primary coil 40 and a locked status indicator 90 that indicates whether the armature 46 (or more generally the differential 10) is locked or unlocked.

The configuration of the secondary coil 60 allows the assembly to act in a linear manner whereby it can be determined, even if the primary coil 40 is on (energized), whether the armature 46 is all the way into the locked position (FIG. 7). In other words, just because the primary coil 40 is energized, does not guarantee that the armature 46 has moved in to the locked position. There may be a point where the differential assembly 10 may not completely attain a locked position due to gear teeth interaction (such as being bound up).

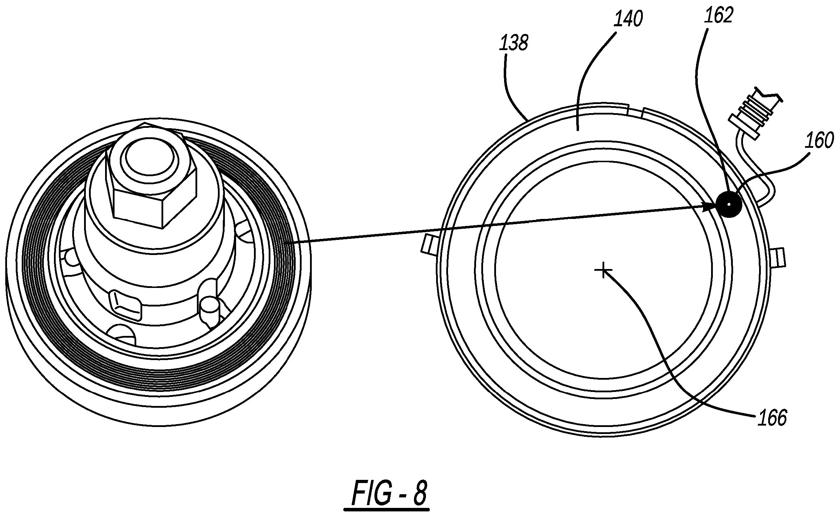

Turning now to FIG. 8, a secondary winding constructed in accordance to another example of the present invention is shown and generally identified at reference 160. The secondary winding 160 is shown relative to a primary coil 140 on a stator 138. The primary coil 140 defines a primary coil central axis 166. The secondary winding 160 defines a secondary coil central axis 162 that is parallel to the primary coil central axis 166. In the example shown, the secondary coil central axis 162 is generally parallel and offset relative to the primary coil central axis 166 defined by the primary coil 140. Electromagnetic interference (EMI) is greatly reduced as a result of the orientation of the secondary winding 160 relative to the primary coil 140. Armature position detection is possible even when the primary coil 140 is receiving DC current.

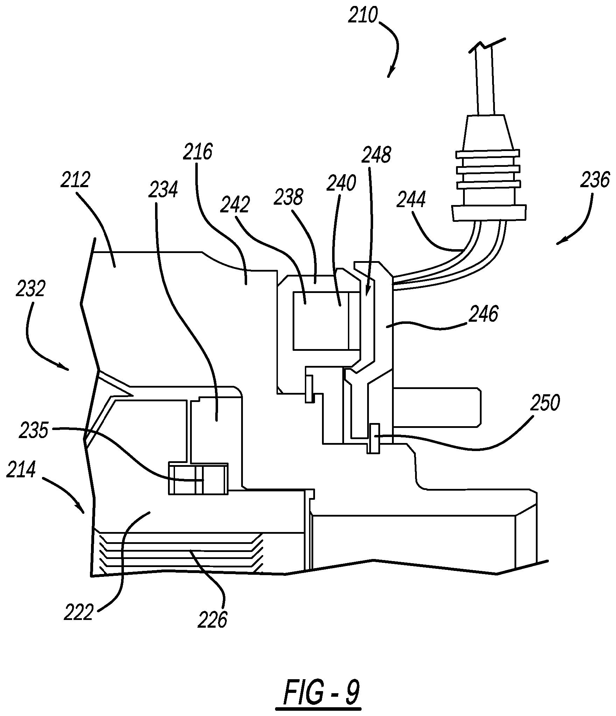

With reference now to FIG. 9, an electronically actuated locking differential constructed in accordance to additional features of the present invention is shown and generally identified at reference 210. The differential 210 generally includes a differential housing or gear case 212. The differential 210 can be housed within a differential case. Unless otherwise described herein, the differential 210 can include similar components as described above with respect to the differential 10, FIG. 1.

Torque input to the differential 210 is typically by an input ring gear (not shown), which may be attached to a flange. A gear set is supported within the gear chamber 214 and has at least a pair of input pinion gears that are mounted rotatably about a pinion shaft, which is secured relative to the gear case 212 by any suitable mechanism. The pinion gears are input gears of the gear set and in meshing engagement with a respective pair of left and right side gears, 222 (one side gear shown in the FIG. 9). The side gears 222 define respective sets of internal, straight splines 226 (only one shown for gear 22) that are adapted to be in splined engagement with mating external splines on a respective pair of left and right axle shafts (not shown).

A rotation-prevention mechanism, generally indicated at 232, can be constructed similarly to the rotation-prevention mechanism 32, FIG. 1 . A lock plate 234 is biased toward the non-actuated, "unlocked" mode by a return spring 235 such as a wave spring. An electronic actuator, generally indicated at 236, is disposed primarily external to the gear case 212. More specifically, the electronic actuator 236 is disposed at the end of and about the gear case 212 adjacent side gear 222 (the first output gear). The electronic actuator 236 has a stator 238 primarily external to the gear case 212. More specifically, the stator 238 can be disposed at the end of and about the gear case 212 adjacent to the flange 216. The stator 238 is stationary and non-rotating relative to the gear case. The electronic actuator 236 also has an electromagnetic (primary) coil, generally indicated at 240, that is disposed in a cavity 242 of the stator 238. The electromagnetic coil 240 is energized by a pair of electrical leads 244 and receives direct current (DC) from a source (not shown). The electronic actuator 236 also has an armature, generally indicated at 246, spaced from the electromagnetic coil 240 to form a gap 248 therebetween.

The armature 246 is mechanically coupled to the differential housing 212 with a retaining clip 250. The retaining clip 250 is formed of low magnetic permeable material such as 302 stainless steel. The stator 238 generates a strong enough flux field to pass through the differential case 212 and all nearby high magnetic permeable materials. A high permeable material (such as SAE 1090 steel) provided in prior art examples can interfere with the actuation of the armature 238 and cause poor performance of the differential 210. By using a low permeable material, the armature 246 will be able to actuate toward the magnetic field generated by the stator coil 240 without interference. While not specifically shown, the rotation prevention mechanism 232 can incorporate a position detection device such as the position detection device 60 described above.

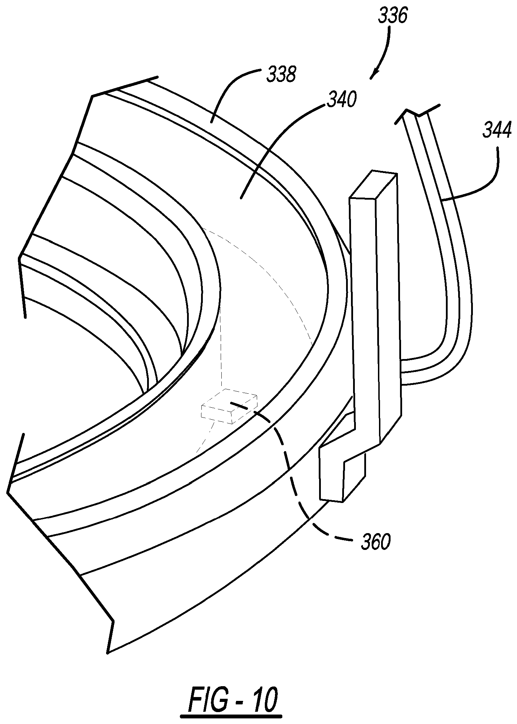

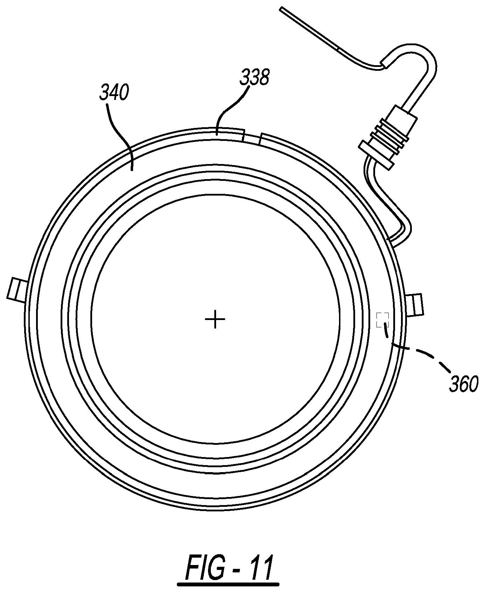

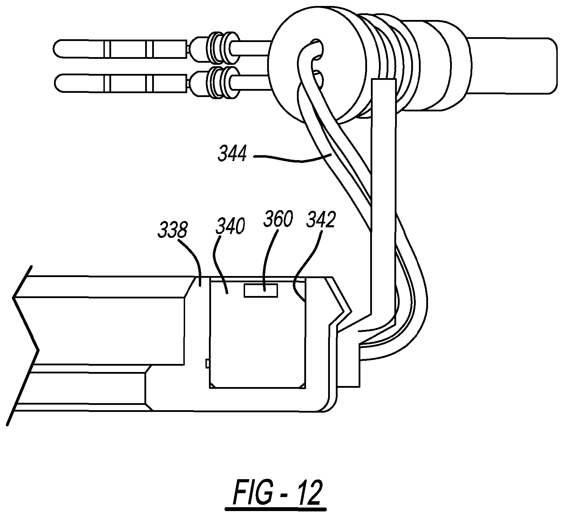

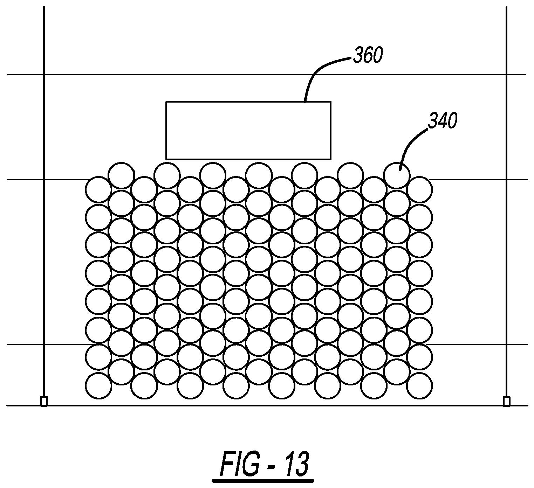

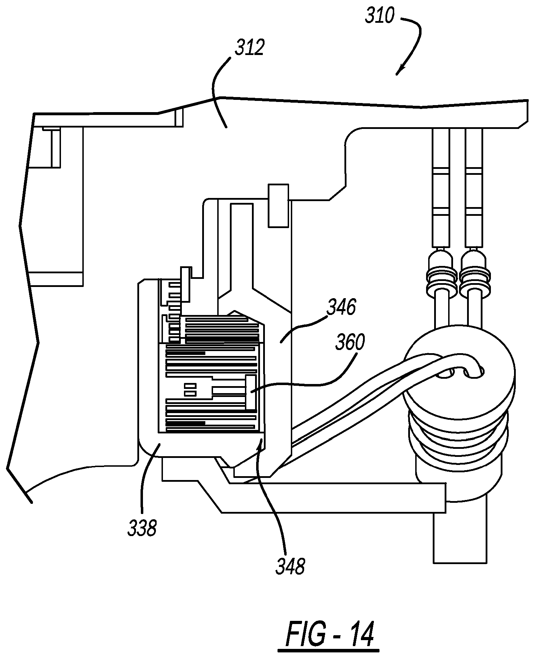

With reference now to FIGS. 10-14, an electrically actuated locking differential 310 (FIG. 14) that does not fall within the definition of the invention as claimed will be described. Unless otherwise described herein, the electronically actuated locking differential 310 can be constructed similarly to the electronically actuated locking differential 10 described above. An electronic actuator 336 has a stator 338 primarily external to a gear case 312. More specifically, the stator 338 is disposed at the end of and about the gear case 312. The stator 338 is stationary and non-rotating relative to the gear case 312. The electronic actuator 336 also has an electromagnetic (primary) coil, generally indicated at 340, that is disposed in a cavity 342 of the stator 338. The electromagnetic coil 340 is energized by a pair of electrical leads 344 and receives direct current (DC) from a source (not shown). The electronic actuator 336 also has an armature, generally indicated at 346 (FIG. 14), spaced from the electromagnetic coil 340 to form a gap 348 therebetween.

The actuator 336 includes a position detection device or sensor 360 disposed in the stator 338 as will be described herein. The sensor 360 can be placed on or near the primary coil 340 within the boundary of the housing of the stator 338. The sensor 360 can be housed within the boundary of the stator 338 providing a pre- packaged self-contained assembly that can be more easily handled in the field as opposed to sensors that are arranged outside of the stator 338. Furthermore, as the sensor 360 is more protected within the structure of the stator 338 once mounted within an axle assembly improving robustness and longevity. Packaging concerns therefore are minimized greatly over prior art examples that may have a sensor outside of the stator 338. The sensor 360 is used to determine the position of the armature 346 relative to the stator 338 to interpret the state of the differential 310 in the locked, semi- engaged or unlocked condition. A signal can be sent from the sensor 360 indicative of a change in inductance to a controller (such as a controller 80, FIG. 4) that sends a signal to a display or other vehicle instrumentation (such as cluster 82, FIG. 4) to convey the state of the differential to the driver. In some examples, the sensor 360 can be a low cost latching sensor or other suitable sensor.

The present teachings provide a solution in that a driver can be notified when the differential is locked or unlocked and when the primary coil is on (energized) or off (de-energized). As can be appreciated, there may be a delay between when a driver initiates the locking of the differential (such as by activating the switch or button 84), and when the armature has been sufficiently moved to a position that results in the differential being locked. Further, the driver is provided real time status on the console 86 of the energized state of the primary coil and the locked status of the armature.

The teachings have been described in great detail in the foregoing specification, and it is believed that various alterations and modifications of the many aspects of the present teachings will become apparent to those having ordinary skill in the art from a reading and understanding of the specification. It is intended that all such alterations and modifications are included in the teachings, insofar as they come within the scope of the appended claims.

## Claims

1. A position detection device (160) configured for use with a locking differential (10, 210), the position detection device configured to determine a position of an armature (46, 246) in relation to a stator (138, 238), the stator having a primary coil (40, 140, 240) that comprises an outer diameter and the armature moving relative to the stator between engaged and disengaged positions corresponding to the locking differential being in a locked and unlocked state, the position detection device comprising:
a single secondary coil (160) disposed proximate to the primary coil and radially disposed within the outer diameter of the primary coil; and
wherein the secondary coil is configured to determine a change in inductance based on movement of the armature, the change in inductance indicative of a change in position of the armature relative to the stator, wherein the primary coil is disposed within a first boundary of the stator and wherein the secondary coil is disposed within a second boundary of the primary coil.
wherein the primary coil defines a primary coil central axis (166) and the secondary coil defines a secondary coil central axis (162), the primary and secondary coil central axes being parallel and offset from one another.

2. The position detection device of claim 1 wherein the stator defines a housing, the primary and secondary coils being disposed within the housing.

3. The position detection device of claim 1 wherein the secondary coil can be used to determine (i) when the primary coil is on and (ii) when the primary coil is off.

4. The position detection device of claim 3, further comprising a primary coil status indicator (88) that indicates an energized state of the primary coil.

5. The position detection device of claim 3 wherein the secondary coil can be used to determine (iii) when the armature is in the disengaged position and (iv) when the armature is in the engaged position.

6. The position detection device of claim 5, further comprising a locked status indicator (90) that indicates whether the armature is locked or unlocked.

7. The position detection device of claim 1 wherein the armature is configured for being mechanically coupled to a housing of the locking differential with a retaining clip (250) included in the position detection device.

8. The position detection device of claim 7 wherein the retaining clip is formed of low magnetic permeable material.

9. The position detection device of claim 8 wherein the low magnetic permeable material comprises 302 stainless steel.

## Patentansprüche

1. Positionsbestimmungsvorrichtung (160), die für die Verwendung mit einem Sperrdifferenzial (10, 210) konfiguriert ist, wobei die Positionsbestimmungsvorrichtung dazu konfiguriert ist, eine Position eines Ankers (46, 246) in Bezug auf einen Stator (138, 238) zu bestimmen, wobei der Stator eine Primärwicklung (40, 140, 240) aufweist, die einen Außendurchmesser umfasst, und wobei sich der Anker relativ zum Stator zwischen einer eingegriffenen und einer ausgerückten Position bewegt, die einem gesperrten bzw. entsperrten Zustand des Sperrdifferenzials entsprechen, wobei die Positionsbestimmungsvorrichtung Folgendes umfasst:
eine einzelne Sekundärwicklung (160), die in der Nähe der Primärwicklung angeordnet ist und radial innerhalb des Außendurchmessers der Primärwicklung angeordnet ist; und
wobei die Sekundärwicklung dazu konfiguriert ist, eine Änderung der Induktivität basierend auf der Bewegung des Ankers zu bestimmen, wobei die Änderung der Induktivität eine Änderung der Position des Ankers relativ zum Stator anzeigt, wobei die Primärwicklung innerhalb einer ersten Begrenzung des Stators angeordnet ist und wobei die Sekundärwicklung innerhalb einer zweiten Begrenzung der Primärwicklung angeordnet ist,
wobei die Primärwicklung eine Primärwicklungs-Mittelachse (166) definiert und die Sekundärwicklung eine Sekundärwicklungs-Mittelachse (162) definiert, wobei die Primär- und Sekundärwicklungs-Mittelachse parallel zueinander und versetzt zueinander angeordnet sind.

2. Positionsbestimmungsvorrichtung nach Anspruch 1, wobei der Stator ein Gehäuse definiert, wobei die Primär- und Sekundärwicklungen innerhalb des Gehäuses angeordnet sind.

3. Positionsbestimmungsvorrichtung nach Anspruch 1, wobei die Sekundärwicklung verwendet werden kann, um zu bestimmen (i) wann die Primärwicklung eingeschaltet ist, und (ii) wann die Primärwicklung ausgeschaltet ist.

4. Positionsbestimmungsvorrichtung nach Anspruch 3, die ferner eine Primärwicklungs-Zustandsanzeige (88) umfasst, die einen erregten Zustand der Primärwicklung anzeigt.

5. Positionsbestimmungsvorrichtung nach Anspruch 3, wobei die Sekundärwicklung verwendet werden kann, um zu bestimmen (iii) wann sich der Anker in der ausgerückten Position befindet, und (iv) wann sich der Anker in der eingegriffenen Position befindet.

6. Positionsbestimmungsvorrichtung nach Anspruch 5, die ferner eine Sperr-Zustandsanzeige (90) umfasst, die anzeigt, ob der Anker gesperrt oder entsperrt ist.

7. Positionsbestimmungsvorrichtung nach Anspruch 1, wobei der Anker dazu konfiguriert ist, mechanisch mit einem Gehäuse des Sperrdifferenzials mit einem in der Positionsbestimmungsvorrichtung enthaltenen Halteclip (250) gekoppelt zu sein.

8. Positionsbestimmungsvorrichtung nach Anspruch 7, wobei der Halteclip aus einem Material mit geringer magnetischer Permeabilität gebildet ist.

9. Positionsbestimmungsvorrichtung nach Anspruch 8, wobei das Material mit geringer magnetischer Permeabilität Edelstahl 302 umfasst.

## Revendications

1. Dispositif de détection de position (160) conçu pour être utilisé avec un différentiel à blocage (10, 210), le dispositif de détection de position étant conçu pour déterminer une position d'une armature (46, 246) par rapport à un stator (138, 238), le stator comportant une bobine primaire (40, 140, 240) qui comprend un diamètre externe et l'armature se déplaçant par rapport au stator entre des positions engagée et désengagée correspondant au fait que le différentiel à blocage se trouve dans un état bloqué et débloqué, le dispositif de détection de position comprenant :
une bobine secondaire unique (160) disposée à proximité de la bobine primaire et disposée radialement à l'intérieur du diamètre externe de la bobine primaire ; et
dans lequel la bobine secondaire est conçue pour déterminer un changement d'inductance basé sur le mouvement de l'armature, le changement d'inductance indiquant un changement de position de l'armature par rapport au stator, dans lequel la bobine primaire est disposée à l'intérieur d'un premier périmètre du stator et dans lequel la bobine secondaire est disposée à l'intérieur d'un second périmètre de la bobine primaire,
dans lequel la bobine primaire définit un axe central (166) de bobine primaire et la bobine secondaire définit un axe central (162) de bobine secondaire, les axes centraux de bobine primaire et secondaire étant parallèles et décalés l'un par rapport à l'autre.

2. Dispositif de détection de position selon la revendication 1, dans lequel le stator définit un carter, les bobines primaire et secondaire étant disposées à l'intérieur du carter.

3. Dispositif de détection de position selon la revendication 1, dans lequel la bobine secondaire peut être utilisée pour déterminer (i) le moment où la bobine primaire est allumée et (ii) le moment où la bobine primaire est éteinte.

4. Dispositif de détection de position selon la revendication 3, comprenant en outre un indicateur (88) d'état de bobine primaire qui indique un état sous tension de la bobine primaire.

5. Dispositif de détection de position selon la revendication 3, dans lequel la bobine secondaire peut être utilisée pour déterminer (iii) le moment où l'armature est dans la position désengagée et (iv) le moment où l'armature est dans la position engagée.

6. Dispositif de détection de position selon la revendication 5, comprenant en outre un indicateur (90) d'état bloqué qui indique si l'armature est bloquée ou débloquée.

7. Dispositif de détection de position selon la revendication 1, dans lequel l'armature est conçue pour être accouplée mécaniquement à un carter du différentiel à blocage avec un clip de fixation (250) inclus dans le dispositif de détection de position.

8. Dispositif de détection de position selon la revendication 7, dans lequel le clip de fixation est constitué d'un matériau à faible perméabilité magnétique.

9. Dispositif de détection de position selon la revendication 8, dans lequel le matériau à faible perméabilité magnétique comprend de l'acier inoxydable 302.
